# EUROPEAN PATENT SPECIFICATION

(11) **EP 3 903 130 B1**
(45) Date of publication and mention of the grant of the patent: **07.06.2023**
(21) Application number: 19832131.7
(22) Date of filing: 20.12.2019
(51) Int. Cl.: G02B 3/14, G02B 7/02, G02B 7/08, G02B 7/10, G02B 13/00

(54) **AN OPTICAL SYSTEM COMPRISING A LENS WITH AN ADJUSTABLE FOCAL LENGTH**
OPTISCHES SYSTEM MIT EINER LINSE MIT EINSTELLBARER BRENNWEITE
SYSTÈME OPTIQUE COMPRENANT UNE LENTILLE AYANT UNE LONGUEUR FOCALE RÉGLABLE

(30) Priority: 28.12.2018 EP 18248266
(43) Date of publication of application: 03.11.2021
(73) Proprietor: Nextlens Switzerland AG, 8953 Dietikon (CH)
(72) Inventor: BÜELER, Michael, 5412 Vogelsang (CH); SMOLKA, Stephan, 8006 Zürich (CH); HAASE, Johannes, 5408 Ennetbaden (CH); VERLANGEN, Matthieu, 8038 Zürich (CH)
(74) Representative: Schulz Junghans Patentanwälte PartGmbB
(86) International application number: PCT/EP2019/086852
(87) International publication number: WO 2020/136143

(56) References cited:
- WO-A1-2019/238205
- US-A1- 2010 046 101
- US-A1- 2011 075 274
- US-A1- 2014 268 361
- US-A1- 2016 124 220

## Description

The invention relates to an optical system particularly for optical imaging, the system comprising at least one lens with an adjustable focal length, said lens comprising an elastically deformable membrane for adjusting the focal length of the lens.

Optical systems that require an optical property, such as the focal length or a zoom, being adjustable are well known in the art.

In order to adjust the optical property of the optical system, at least one optical element, such as a solid fixed-focal length lens is mechanically moved in the optical system, particularly along the optical axis.

Often times also two optical elements, e.g. two lenses have to be moved in order to adjust the desired optical property of the optical system.

Mechanical, lateral movement of optical elements is prone to failure and is less robust as compared to fixed optical systems that do not provide an adjustment.

Moreover, particularly due to manufacturing tolerances, the assembly of an optical system requires elaborate adjustment of the optical elements in order to provide satisfying optical properties. This alignment process becomes typically more tedious the more lenses are comprised in the optical system.

Related systems are known from US 2014/268361A1 and US 2011/075274A1.

An object of the invention is to provide an optical system capable of adjusting at least one optical property and that is easy to assemble without the need of elaborate alignment procedures.

This object is achieved by the optical system having the features of claim 1.

Advantageous embodiments are described in the subclaims.

According to claim 1, the optical system comprises a solid lens barrel for optical elements, wherein the lens barrel extends along an optical axis of the optical system,
b) a first lens having an adjustable focal length, wherein the first lens comprises a container filled with a transparent fluid, wherein the container comprises an elastically deformable and transparent membrane facing a transparent bottom portion of the container,
wherein particularly at its axial end portions, the lens barrel has a first and a second opening along the optical axis for receiving incident and exiting light of the optical system, wherein the first and/or the second opening are further configured to receive the lens system, wherein the lens barrel has a first slot extending perpendicular to the optical axis, wherein the first lens is inserted through the first slot perpendicular the optical axis into the lens barrel.

A lens system particularly comprises a plurality of solid, i.e. rigid lenses that are arranged in a predefined order along the optical axis of the optical system. The lens system can furthermore comprise other optical elements, such as spacers, apertures, filters and the like.

A solid lens in the context of the specification refers to a lens that has fixed focal length that cannot be changed.

An optical element is particularly one of:
- a solid lens, particularly made of glass, a plastic or a polymer,
- a filter, for example for filtering out unwanted wavelength bands or to reduce the amount of light passing through the optical system,
- a spacer element for spacing optical elements with respect to each other along the optical axis,
- an aperture element for limiting the optical aperture of the lens system at a specific position along the optical axis,
- a mirror, particularly a semi-transparent mirror.

A spacer can also be used as an aperture element and vice versa in the optical system.

The term "lens barrel" in the context of the present specification, particularly refers to a device that is configured to hold and particularly rigidly hold the optical elements. The lens barrel particularly has a lens barrel wall for providing a stability and environmental protection to the optical elements.

The term "environmental protection" particularly refers to protection of the optical elements from ambient light, moisture, and/or dust.

The lens barrel particularly has a cylindrical inner contour for enclosing and holding the optical element that particularly extend circularly around the optical axis.

The lens barrel particularly comprises or consists of a metal, a plastic or a polymer.

The lens barrel particularly extends straight along the optical axis, particularly wherein the outer barrel wall has a cylindrical, half-cylindrical, or a rectangular cross-sectional shape orthogonal to the optical axis.

The lens barrel is particularly configured to absorb light particularly within the wavelength range of light that can be detected by an image sensor of the optical system. For this reason the lens barrel can be black at least on an inside of the lens barrel enclosing the optical elements.

The lens barrel has the first and the second opening along the optical axis, such that light can enter and exit the lens system inside the lens barrel.

At least one of these openings is configured to receive the optical elements during assembly of the optical system. Therefore, at least one of the openings has an aperture that is large enough to receive the optical elements.

It is possible to restrict the opening of the lens barrel after assembly by covering at least one opening with an aperture component for limiting the aperture of the lens barrel.

The lens system is particularly inserted through the first and/or the second opening into the lens barrel.

For assembly of the first lens with the adjustable focal length, the lens barrel has a dedicated first slot that is configured to receive the first lens particularly in a transversal manner, i.e. the first lens can be and is inserted into the lens barrel through said first slot and particularly not through the first or the second opening of the lens barrel. Therefore the first and the second opening are particularly different openings of the lens barrel than the first slot.

The first slot is particularly arranged on a side portion of the lens barrel.

The first slot is an opening of the lens barrel, particularly an opening in the lens barrel wall that is oriented perpendicular to the optical axis of the optical system. The first slot is configured to receive the first lens particularly by means of a perpendicular insertion movement during assembly.

The first and the second opening particularly are configured to receive the lens system in an axial manner or an axial insertion movement along the optical axis of the lens barrel.

In order to fix the first and/or the second lens to the lens barrel, the first and or the second slot particularly comprise interfaces that are particularly arranged next to recesses or opening in form of holes for the provision and reception of an adhesive. The first and or the second lens comprise corresponding interfaces for the adhesive.

The first lens is inserted in the optical system and particularly into the lens barrel particularly in a perpendicular motion with respect to the optical axis of the optical system.

This stands in contrast to the lens system that is particularly inserted with a motion along the optical axis, via the first or second opening into the lens barrel.

The first lens is arranged such that its optical axis is in alignment with the optical axis of the optical system, i.e. the membrane of the first lens is arranged on the optical axis.

The first lens having an adjustable focal length, changes its focal length by adjusting the curvature of the elastically deformable membrane (see below).

The first lens can even switch from a positive lens to a negative lens by changing the membrane curvature accordingly.

The curvature of the membrane is adjusted by increasing or decreasing the pressure on the fluid in the container. When the pressure is increased on the fluid the membrane is forced to bulge outwards the container, wherein if pressure is decreased the membrane is forced to bend inwardly.

According to one embodiment of the invention, the transparent bottom portion of the container comprises or consists of a rigid compound such as plastic, polymer or glass.

According to another embodiment of the invention, the transparent bottom portion of the container comprises or consists of a second elastically deformable membrane that adjusts its curvature depending on the pressure of the fluid in the container.

The present invention can be applied to a wide variety of different applications, particularly: ophthalmology equipment such as refractometer, pachymeter, biometrie, perimeter, refrakto-keratometer, lensanalyzer, tonometer, anomaloscope, kontrastometer, endothelmicroscope, binoptometer, OCT, ophthalmoscope, RTA, machine vision, cameras, mobile phone cameras, medical equipment, robot cams, virtual reality or augmented reality cameras, microscopes, telescopes, endoscopes, drone cameras, surveillance cameras, web cams, automotive cameras, motion tracking, binoculars, research, automotive, projectors, ophthalmic lenses, range finder, bar code readers etc.

According to another embodiment of the invention, the first slot is configured to provide a hard stop for the first lens so as to provide a predefined positing to the first lens in the optical system.

According to another embodiment of the invention, the optical system comprises a second lens having an adjustable focal length, wherein the second lens comprises a container filled with a transparent fluid, wherein the container comprises an elastically deformable and transparent membrane facing a transparent bottom portion of the container, wherein the lens barrel has a second slot extending perpendicular to the optical axis, wherein the second lens is inserted through the second slot perpendicular the optical axis into the lens barrel.

The second slot and the second lens can be embodied according to the disclosed embodiments for the first slot and the first lens but do not have to be identical to the first slot and the first lens.

According to this embodiment, for assembly of the second lens with the adjustable focal length, the lens barrel has a dedicated second slot that is configured to receive the second lens particularly in a transversal manner, i.e. the second lens can be and is inserted into the lens barrel through said second slot and particularly not through the first or the second opening of the lens barrel.

The second slot is particularly arranged on a side portion of the lens barrel.

The second slot is particularly an opening of the lens barrel, particularly an opening in the lens barrel wall that is oriented perpendicular to the optical axis of the optical system.

The second lens is therefore inserted in the optical system and particularly into the lens barrel particularly in a perpendicular motion with respect to the optical axis of the optical system.

According to one embodiment of the invention, the transparent bottom portion of the container of the second lens comprises or consists of a rigid compound such as a polymer or glass.

According to another embodiment of the invention, the transparent bottom portion of the container of the second lens comprises or consists of a second elastically deformable membrane that adjusts its curvature depending on the pressure of the fluid in the container.

The first and the second lens are particularly distinct components of the optical system, particularly having no fluidic connection between their containers.

The first and the second slot are arranged axially shifted along the optical axis of the optical system and thus along the lens barrel.

According to an embodiment, the optical zoom device comprises a rigid lens arranged in front of the light deflecting device (e.g. folding prism or mirror) in the optical path, particularly when the first lens is arranged after the light deflecting device in the optical path of the optical zoom device.

According to another embodiment of the invention, for adjusting the focal length of the first and/or the second lens, the membrane of the first and/or the second lens is connected to a circumferential rigid lens shaping element of the first and/or second lens for defining an area of the membrane having an adjustable membrane curvature.

The lens shaping element allows for a well-defined deformation of the first and/or second lens enabling a better optical performance for example by reducing optical aberrations induced by the first and/or second lens.

According to another embodiment of the invention, the container of the first and/or the second lens encloses a lens volume filled with the fluid and a reservoir volume filled with the fluid, wherein the reservoir volume is connected, particularly fluidically connected to the lens volume, wherein the container of the first and/or the second lens comprises an elastically deformable wall member adjacent the reservoir volume of the container of the first and/or the second lens.

This embodiment allows for adjusting the focal length of the first and/or second lens by a remotely or externally arranged actuator, allowing a greater flexibility of the design and assembly of the optical system.

Another advantage of this embodiment is that the membrane and the lens reservoir can be spaced apart from components of the liquid lens, such as the actuator, that generate heat influencing the optical properties of the lens in an undesirable manner.

According to another embodiment of the invention, the elastically deformable wall member of the container of the first and/or the second lens is formed by the membrane of the first and/or the second lens.

This embodiment allows for a less-complex actuation mechanism. Moreover, when the system is powered off, the pressure in the container may equalize such that the membrane stress is minimized to operation times only.

According to another embodiment of the invention, the reservoir volume of the container of the first and/or the second lens is arranged laterally next to the lens volume of the container of the first and/or the second lens in a direction perpendicular to the optical axis of the first and/or the second lens.

The embodiment provides assembly space away from the optical axis and thus away from the temperature-sensitive components, such as the membrane.

According to another embodiment of the invention, the deformable wall member and the membrane are arranged on the same side of the container.

According to another embodiment of the invention, the container of the first lens comprises a frame structure forming a lateral wall of the container of the first lens, wherein the frame structure of the container of the first lens comprises a first recess forming the lens volume of the container of the first lens that is covered by the membrane of the container of the first lens and particularly by the wall of the container of the first lens, and wherein the frame structure of the container of the first lens comprises a second recess forming the reservoir volume of the container of the first lens that is covered by the wall member of the container of the first lens and particularly by the wall of the container of the first lens; and/or wherein the container of the second lens comprises a frame structure forming a lateral wall of the container of the second lens, wherein the frame structure of the container of the second lens comprises a first recess forming the lens volume of the container of the second lens that is covered by the membrane of the container of the second lens and particularly by the wall of the container of the second lens, and wherein the frame structure of the container of the second lens comprises a second recess forming the reservoir volume of the container of the second lens that is covered by the wall member of the container of the second lens and particularly by the wall of the container of the second lens.

According to another embodiment of the invention, the first recess of the frame structure of the first lens comprises a circumferential edge which forms the lens shaping element of the first lens; and/or wherein the first recess of the frame structure of the second lens comprises a circumferential edge which forms the lens shaping element of the second lens.

According to another embodiment of the invention, the first and/or the second lens comprises a rigid pusher plate arranged on the elastically deformable wall member, particularly on a side of the wall member that faces outwards the container, wherein the pusher plate is configured to receive an external force moving the pusher plate inwards or outwards the reservoir volume so as to shrink or increase the reservoir volume and thus to increase or shrink the lens volume accordingly by means of deforming the membrane thereby adjusting the focal length of the first and/or the second lens.

The rigid pusher plate particularly has a recess on an actuator facing side for receiving an actuator piston or pin.

The rigid pusher plate allows for an even provision of actuating forces on the wall member allowing a more precise actuation and distributing actuation stress over the whole area of the pusher plate.

According to another embodiment of the invention, the membrane of the first and/or the second lens inserted in the first and/or second slot is enclosed by the lens barrel and particularly arranged on the optical axis, such that an optical axis of the first and/or the second lens and the optical axis of the lens barrel are aligned, wherein a container portion comprising the reservoir volume and the deformable wall member protrudes from the lens barrel, particularly radially, such that the deformable wall member, particularly the pusher plate is accessible from an outside of the lens barrel, allowing to control the focal length of the first and/or the second lens with an external lens actuator that can or is attached to the optical system from the outside and particularly in a separate assembly step.

According to another embodiment of the invention, the lens system comprises at least one optical element stack with a plurality of stacked optical elements, arranged along and on the optical axis in the lens barrel.

The optical element stack is inserted through the first or the second opening of the lens barrel.

An optical element stack in the context of the specification particularly refers a plurality of optical elements that are arranged adjoiningly in a row. The stacked optical elements are particularly glued to or otherwise attached to each other so as to form a rigid entity.

According the another embodiment of the invention, each of the stacked optical elements of the optical element stack has a solid rim portion extending particularly symmetrically around the optical element and particularly around the optical axis of the optical system, wherein at least on one side of the optical element facing along the optical axis said rim portion comprises a contact portion for adjoining the contact portion of the adjacent optical element of the stacked optical elements.

The rim portion particularly extends in a predefined radius from the optical axis of the respective optical element or the optical system. The rim portion is particularly located on a circumferential edge of the optical element.

The rim portion is particularly formed as a separate component framing the optical element.

Alternatively the rim portion is integrally formed with the optical element.

Each optical element comprises two sides facing along the optical axis, one side facing for example towards incident light and an opposite side facing the transmitted light along the optical axis.

The sides of the optical elements do not have to be solid but are merely a reference for addressing the geometric property of the optical element.

The contact portion is particularly on an edge of the rim portion facing along the optical axis.

At the contact portion the stacked optical elements are adjoined and fixed to each other.

According to another embodiment of the invention, the contact portion is conically inclined towards or away from the optical axis.

This geometry of the contact portion provides a self-centering effect for adjoining optical elements during assembly of the stacked optical elements, which allows rapid and reliable manufacturing of the optical system particularly in an automated or semi-automated fashion.

According to another embodiment of the invention, the adjoining contact portions of two adjacent optical elements of the stacked optical elements are inclined such that the contact portions of the two optical elements form complementary and adjoining contact surfaces.

These contact surfaces are particularly planar such that an adhesive can connect the two optical elements at the contact surfaces in a durable fashion.

This geometry furthermore allows stacking a plurality of optical elements, wherein the stack order can be "coded" in the inclined contact portions by means of different inclinations, such that only if the correct two optical elements are put in contact the contact surfaces are complementary and fit for being connected by an adhesive. According to another embodiment of the invention, the rim portion of at least one optical element of the stacked optical elements has contact portions inclined towards and/or away from the optical axis on both sides of the optical element.

Such an optical element can be positioned between two optical elements such that optical elements stack with more than two optical elements can be assembled.

According to another embodiment of the invention, the adjoining contact portions of adjacent optical elements of the stacked optical elements form a recess for an adhesive compound for fixing the adjacent optical elements to each other at the contact portions, the recess particularly circumferentially surrounding the contact surfaces of the contact portions.

The recess is particularly a glue pocket for the adhesive that allows provision the adhesive to the recess, such that the adhesive can flow between the contact surfaces.

This embodiment allows for reduced complexity in manufacturing of the optical element stack.

According to another embodiment of the invention, at least one optical element of the stacked optical elements is a solid lens and the contact portion of the lens has a different inclination than a surface curvature of the lens.

According to another embodiment of the invention, the rim portion protrudes in an axial direction along the optical axis from the optical element.

According to another embodiment of the invention, at least one optical element of the stacked optical elements is a spacer element or an aperture element formed as a cylinder with a cylinder wall, wherein the cylinder extends along the optical axis and the cylinder wall comprises the contact portions.

The spacer element can be transparent, wherein the aperture element comprises at least one non-transparent portion.

The spacer element is for example arranged between solid lenses for providing a predefined distance between the lenses.

The spacer element and/or the aperture element comprise the contact portion and can thus be assembled in the optical element stack in a self-centering manner like any other optical element of the optical stack, reducing complexity during assembly. According to another embodiment of the invention, the lens barrel has an inner barrel wall, wherein the inner barrel wall extends around the lens system, wherein the barrel wall contacts the lens system and is configured to radially center the lens system on the optical axis with three azimuthally regularly spaced flat portions in the inner barrel wall.

This embodiment can be implemented additionally or alternatively to the contact portions of the stacked optical elements.

The three flat portions particularly "cut-short" in a secant fashion the circular geometry of the inner barrel wall and thus are configured to exert a slight clamping force on the optical element. The inner barrel wall therefore is not perfectly circular. The three flat portions provide an integrated alignment tool for the lens system. According to another embodiment of the invention, at least one optical element of the lens system or at least one optical element of the stacked optical elements has a rim portion (as defined above) comprising a contact portion with a contact surface oriented perpendicular to the optical axis of the lens barrel, wherein said optical element adjoins and particular is in stop with a corresponding contact surface of the lens barrel such as to align the lens system or the stacked optical elements along the optical axis of the lens barrel.

The perpendicularly contact surfaces of the lens barrel help to align the lens system having the optical element with the perpendicular contact surfaces along the optical axis.

This embodiment allows a rapid and precise assembly of the optical system.

According to another embodiment of the invention, the at least one solid lens of the lens system has an aperture element, wherein the aperture element is arranged on a portion of the solid lens that is formed as a ring-shaped area perpendicular to the optical axis, wherein said area is located radially inward of the rim portion of the at least one solid lens, particularly wherein said area is radially limited by a circumferential step between said area and the rim portion.

This embodiment allows for apertures between stacked optical elements that have to be spaced apart comparably close.

According to another embodiment of the invention, the optical system comprises an image sensor particularly arranged at the lens barrel.

According to another embodiment of the invention, the optical system comprises an image sensor arranged at the lens barrel particularly comprising an optical element stack, wherein the first slot comprising the first lens with an adjustable focal length is arranged at a first predefined distance from the image sensor, particularly wherein the lens system, particularly the optical element stack is arranged on the optical axis between the first lens and the image sensor.

According to another embodiment of the invention, the optical system comprises an image sensor arranged at and particularly attached to the lens barrel, wherein the lens barrel comprises two optical element stacks, a first optical element stack and a second optical element stack, with stacked optical elements, wherein the first lens with an adjustable focal length is arranged at a first predefined distance from the image sensor, wherein the second lens with an adjustable focal length is arranged at a second predefined distance from the image sensor, wherein the first optical element stack is arranged on the optical axis between the first lens and the image sensor, wherein the second optical element stack is arranged between the first and the second lens on the optical axis of the lens barrel, particularly such that the optical system forms an optical zoom system, particularly wherein the zoom is adjustable by means of the adjustable focal lengths of the first and the second lens.

According to another embodiment of the invention, the second predefined distance is twice as large as the first predefined distance, such that the first and second slot comprising the first and the second lens are arranged equidistant to each other along the optical axis.

This embodiment particularly allows using the same or a similar actuator type for actuating the focal length of first and the second lens, as similar changes of focal length are usually required in this geometry.

According to another embodiment of the invention, a fold mirror or fold prism is arranged at and particularly attached to the lens barrel.

The term "fold mirror" or fold prism" particularly refers to the function of the mirror or prism, namely to fold the optical path of the optical system. Fold mirror is sometimes referred to as folding mirror or folded mirror in the art.

The mirror can be glued (with a mirror frame) to the lens barrel for providing a rigid optical system.

This embodiment allows for arranging the optical system in devices with predefined spaces and layout geometries that particularly are compact and crowded with other components, such as mobile phones.

According to another embodiment of the invention, the folding mirror is an adjustable mirror configured to particularly actively optically stabilize the optical system.

This embodiment allows the incorporation of the optical system in mobile handheld devices with a camera, such as mobile phones. The active stabilization can be achieved by means of a closed loop control.

According to another embodiment of the invention, the lens barrel comprises a centering structure comprising a protrusion and/or a recess, wherein the fold mirror or the fold prism comprises a complementary centering structure comprising a protrusion fitting in the recess of the centering structure of the lens barrel and/or a recess for receiving the protrusion of the centering structure of the lens barrel, such that the fold mirror or the fold prims can be arranged and attached in predefined position to the lens barrel.

This embodiment allows for a rapid, automated and reliable assembly of the optical system possibly omitting an optical alignment step.

According to another embodiment of the invention, the lens barrel comprises transverse openings for the insertion of an alignment tool or an adhesive for fixing the optical elements in the lens barrel.

This embodiment allows for fine-tuning the optical system with the lens system inserted in the lens barrel.

According to another embodiment of the invention, the first and/or the second slot has a hard stop portion for the first and/or the second lens for adjoining the first and/or the second lens to said hard stop portion in a predefined position.

This embodiment allows for precise assembly and well-defined position and orientation of the first and the second lens in the lens barrel.

The hard stop portion is particularly integrally formed with lens barrel, particularly with the first and/or the second slot.

According to another embedment of the invention, the lens barrel is comprised in a clamping device that is arranged around the lens barrel, wherein the clamping device exerts a clamping force on the lens barrel along the optical axis, such as to provide additional stability, particularly in terms of stiffness and rigidity, to the optical system. The clamping device particularly comprises or consists of a metal or a polymer.

The clamping device can be formed as a housing so as to provide additional protection against environmental influences, such as dust, humidity or light.

According to another embedment of the invention, the first lens comprises an actuator that is configured to act on the elastically deformable first wall member of the container of the first lens to pump fluid from the reservoir volume of the first lens into the lens volume of the first lens or from the lens volume of the first lens into the reservoir volume of the first lens so as to change the curvature of said area of the membrane of the first lens and therewith the focal length of the first lens.

The actuator is particularly a voice coil actuator, a reluctance actuator, or a piezo actuator with a movable actuator piston for applying a force on the deformable wall member of the container.

According to another embedment of the invention, the second lens comprises an actuator that is configured to act on the elastically deformable second wall member of the container of the second lens to pump fluid from the reservoir volume of the second lens into the lens volume of the second lens or from the lens volume of the second lens into the reservoir volume of the second lens so as to change the curvature of said area of the membrane of the second lens and therewith the focal length of the second lens.

The actuator is particularly a voice coil actuator, a reluctance actuator, or a piezo actuator with a movable actuator piston for applying a force on the deformable wall member of the container.

According to another embodiment of the invention, the container of the first and/or the second lens comprises an assembly structure allowing the actuator of the first and/or the second lens to adjoin with the container in a laterally shifted first assembly position, wherein the assembly structure is configured to allow a lateral movement of the actuator towards the deformable wall member from said first assembly position keeping a safety clearance between an actuation piston of the actuator and the deformable wall member to a second position centered over the deformable wall member, wherein the assembly structure is configured to allow an axial movement of the actuator particularly parallel to the optical axis of the lens barrel to a third position at which the actuator piston adjoins with the deformable wall member, particularly with the push plate, only when the actuator is at the second position, particularly wherein the assembly structure is configured to lock the actuator in the third position. This embodiment allows for a secure and destruction free-assembly of the optical system, particularly with respect to a damage to the deformable wall member of the first and/or the second lens.

According to another embodiment of the invention, the lens barrel comprises a portion having a rectangular outer cross-section, such that a stiffness of the barrel is increased.

According to another embodiment of the invention, at least one, particularly all optical elements comprised in the lens system, more particularly all optical elements, i.e. also the first and the second lens, extend around an optical axis of the optical system, wherein the outer contour, particularly a cross-section orthogonal to the optical axis, of the optical element has a circular section and at least one, particularly two planar or non-circular sections, wherein the at least one planar or non-circular section abuts the circular section, wherein the lens barrel has at least at one portion along the optical axis, that exhibits the same cross-section, such as to fit the optical element with the planar or non-circular section.

The embodiment provides a predefined orientation to the at least one optical element in the lens barrel, also referred to as D-cut optical element. The non-circular section can be a protrusion and extrusion or a notch. A D-cut optical element therefore deviates at least in one section from the circular outer contour such that the rotational symmetry of the optical element is broken. This section is referred to as the planar or non-circular.

The lens barrel according to this embodiment particularly has a non-cylindrical inner contour for enclosing and holding the D-cut optical element.

The inner contour is particularly an extrusion of the shape of the D-cut element along the optical axis of the lens barrel.

According to one embodiment, the planar section follows a secant of the circle that is defined by the complete virtual continuation of the circular section around the optical element.

According to another embodiment, the rim portion extends along the D-cut contour of the optical element.

According to another embodiment of the invention, the lens barrel has openings in its barrel wall that are covered with a fabric for protecting the optical system from dust and environmental influences but allows for an exchange of air.

The problem according to the invention is furthermore solved by an assembly method for the optical system, the method comprising the steps of:
a) Inserting the lens system in the lens barrel through the first and/or second opening of the lens barrel,
b) Inserting the first lens in the first slot,
c) Assembling the actuator for the first lens to the first lens and the lens barrel,
d) Attaching the folding mirror to the lens barrel,
e) Attaching the image sensor to the lens barrel.

According to another embodiment of the method, the lens system comprises the first and the second optical element stack, wherein in a first step of inserting the lens system, the first optical element stack is inserted in the lens barrel through the first opening of the lens barrel, and in a second step of inserting the lens system, the second optical element stack is inserted in the lens barrel through the second opening of the lens barrel.

According to another embodiment of the method, the second lens is inserted in the second slot of the lens barrel and the actuator for the second lens is attached to the second lens and the lens barre, prior to step d) of the method.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

In the following, further features as well as embodiments of the present invention are described with reference to the Figures that are appended to the claims, wherein:
- Fig. 1: shows an exploded schematic view of an optical zoom system according to the invention;
- Fig. 2: shows the insertion process of the first and second lens into the first and second slot;
- Fig. 3: shows a schematic exploded cross-section through an optical element stack with contact portions having inclined contact surfaces;
- Fig. 4A+B: shows a schematic cross-section through an optical element stack with contact portions having inclined contact surfaces and glue pockets formed by the adjoining contact portions;
- Fig. 5: shows a schematic cross-section through an optical element stack with contact portions having inclined contact surfaces and one contact surface being perpendicular to the optical axis;
- Fig. 6: shows three azimuthally flat portions of the lens barrel;
- Fig. 7: shows a schematic cross-section through an assembled optical element stack with an aperture element attached to a solid lens;
- Fig. 8: shows a schematic cross-section through an optical zoom system having equidistantly arranged first and second lenses;
- Fig. 9: shows a schematic cut through the lens barrel having gluing holes for assembly;
- Fig. 10: shows the assembly process of the actuators to the optical system;
- Fig. 11: shows mating pins for the fold mirror and the assembly process to the lens barrel; and
- Fig. 12: shows a schematic cross-section of the optical system comprising a clamping device.

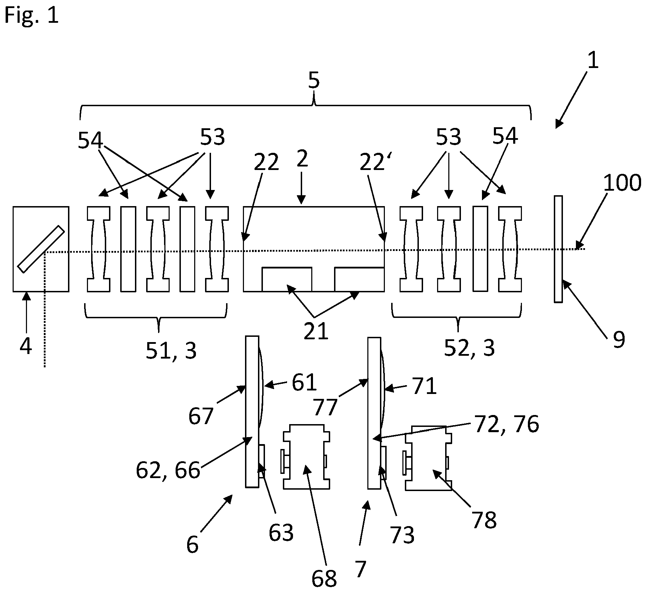

Fig. 1 shows a schematic exploded cross-section of an exemplary embodiment of the optical system 1 according to the invention. The optical system 1 comprises the lens barrel 2 extending along the optical axis 100 of the optical system 1. The lens system 5 to be inserted into the lens barrel 2 is composed of two distinct optical element stacks 51, 52, a first optical element stack 51 and second optical element stack 52, wherein each of the two stacks 51, 52 comprises a plurality of solid lenses 53 and spacers 54. The first optical element stack 51 is to be inserted into the barrel 2 through the first opening 22 of the barrel 2, wherein the second optical element stack 52 is to be inserted through a second opening 22' of the lens barrel 2. The first opening 22 of the lens barrel 2 is located on the side facing the incident light coming from a folded mirror 4, wherein the second opening 22' of the lens barrel 2 is located opposite the first opening 22, namely on the side facing an image sensor 9 of the optical system 1.

In the assembled state of the optical system 1 the fold mirror 4 is attached to the lens barrel 2 and also the image sensor 9 is attached to the lens barrel 2 for example by means of an adhesive.

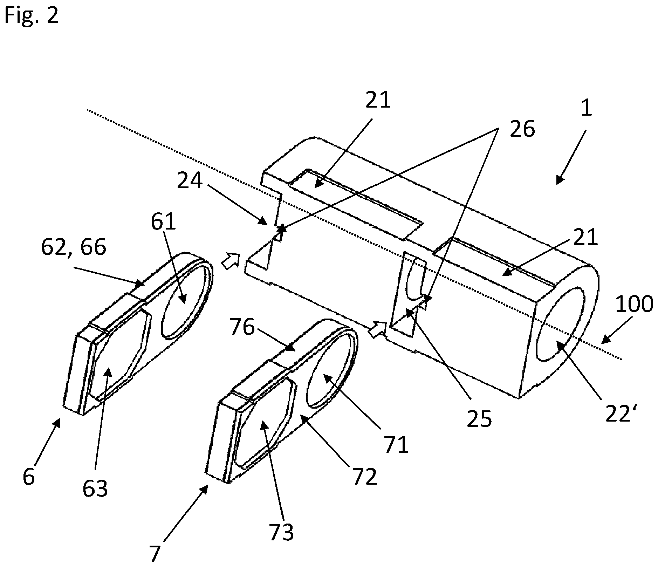

The lens barrel 2 comprises a first slot 24 (see e.g. Fig. 2) and a second slot 25 (see e.g. Fig. 2) for receiving a first tunable lens 6 and a second tunable lens 7.

The first tunable lens 6, also referred to as the first lens 6 in the context of the current specification, has an adjustable focal length. Also the second tunable lens 7 has an adjustable focal length.

The first and the second lens 6, 7 each have a container 62, 72 enclosing a reservoir with a transparent fluid.

The reservoir is covered at a lens volume of the container 62, 72 with an elastically deformable membrane 61, 71 that acts as the adjustable lens surface.

Opposite the membrane 61, 71 the container 62, 72 comprise a transparent bottom portion 67, 77. In this example the bottom portion 67, 77 is a rigid bottom portion. The first and the second lens 6, 7 each comprise an optical axis that extends perpendicularly through the membrane 61, 71.

The container 62, 72 of the first 6 and the second lens 7 extends laterally from the optical axis 100 of the first and second lens 6, 7 to one side. The container 62, 72 comprises a reservoir volume (not shown) that is arranged laterally shifted with respect to the lens volume (not shown) under the membrane 61, 71. The reservoir volume and the lens volume of the first and/or second lens 6, 7 are either directly fluidically connected or connected in a communicating manner, e.g. by means of a third membrane separating the reservoir volume from the lens volume.

The reservoir volume is covered with a deformable wall portion 63, 73, wherein in this example the wall member 63, 73 is formed by the elastically deformable membrane 61, 71.

The membrane 61, 71 is connected with a lens shaping device surrounding the membrane 61, 71 in a circular fashion, enabling the membrane 61, 71 to bulge or bend symmetrically around the optical axis 100.

The deformable wall portion 63, 73 is connected to the container walls 66, 76. The deformable wall portion 63, 73 is located on the same side as the membrane 61, 71. On the deformable wall member 63, 73 a pusher plate (not shown) is arranged, configured to be moved by an actuator piston (not shown). The pusher plate can be glued to the deformable wall member.

When the actuator piston pushes the pusher plate towards the reservoir volume, said volume shrinks as the deformable wall member 63, 73 bulges towards the reservoir volume. Accordingly, the membrane 61, 71 experiences a force driving the membrane 61, 71 outwards the lens volume, thereby adjusting the focal length of the first and/or second lens 6, 7.

In the assembled state or during assembly, the first lens 6 and the second lens 7 are inserted to the lens barrel 2 through the laterally arranged slots 24, 25 of the lens barrel 2 (e.g. cf. Fig. 2). This allows an independent and rapid assembly of first and second lens 6, 7, the optical element stacks 51, 52, the image sensor 9 and the fold mirror 4.

The lens barrel 2 provides protection against dust, humidity and light as well as other environmental influences. The lens barrel 2 is formed as a housing and configured to hold and fix the optical elements 3 in the optical system 1. The lens barrel 2 is a stiff and rigid component of the optical system 1 in order to provide stability to the assembled optical elements 3.

Due to the laterally shifted reservoir volume of the containers 62, 72 of the first and the second lens 6, 7, the actuators 68, 78 are arranged outside the lens barrel 2. This layout provides improved heat decoupling between the optically active region of the first and the second lens 6, 7, i.e. the membrane 61, 71, the lens volume and the transparent bottom portion 67, 77. Heat generated by the respective actuator 68, 78 can be dissipated more efficiently outside the lens barrel 2 and does not couple directly to the optical active region of the first and/or second lens 6, 7.

The improved thermal isolation of the optical active region of the first and second lens 6, 7 due to the specific layout of the container 62, 72 allows for more compact and robust optical systems.

The fold mirror 4 of the optical system 1 is an actuated fold mirror for optical image stabilization.

As can be seen in Fig. 2, the first and the second lens 6, 7 are inserted in the first and second slot 24, 25 without the actuators 68, 78, which allows a simplified assembly.

During assembly the optical axis 100 of the system 1 is particularly oriented along the gravity vector, minimizing gravity sag, leaving the optical system 1 closer to its nominal performances.

The final alignment of the first and second lens 6, 7 as well as the lens system 5 can be done by means of a laser or an optocentric device and a multi-axis stage system.

The first and the second lens 6, 7 are glued with an adhesive to the lens barrel 2. The slots 24 25 for the first and the second lens 6, 7 have dedicated glue pockets and interfaces 26 to which the first and the second lens 6, 7 are brought to stop and glued together.

The lens barrel 2 can be made from plastics or a metal, for example by means of injection molding, machining e.g. EDM, additive manufacturing or the like.

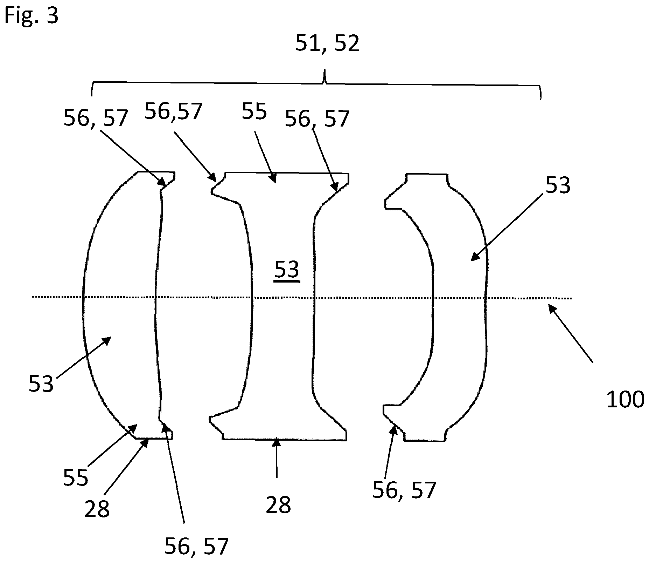

Fig. 3 shows an exploded view of an optical element stack 51, 52 comprising a plurality of solid lenses 53. Each lens 53 comprises an integrally formed rim portion 55 with at least one contact portion 56 for adjoining the lenses 53. The two solid lenses 53 on the left and right side of the stack each comprise one contact portion 56 having a contact surface 57 inclined towards the optical axis 100 and towards the lens 53 arranged in the middle. The middle lens comprises two contact portions 56 and two contact surfaces 57. The contact surfaces 57 are inclined towards the optical axis 100 such that they form complementary surfaces 57 to the contact surfaces 57 of the left and right lens 53. Thus, in the assembled state of the three lenses 53 the lenses 53 adjoin at the contact surfaces 57 and are glued together with the contact surfaces 57. Due to the conically inclined contact surfaces 57 the three lenses 53 self-center, when they are brought in contact at the contact portions 56. The assembly can for example be facilitated by stacking the lenses 53 vertically on a vibrating shaker device such that the lenses 53 automatically align.

The flat region 28 of the rim portion 55 facing outwards the optical axis 100 and towards the lens barrel 2 can be used to fix the stacked lenses 53 to the lens barrel 2, e.g. by means of an adhesive.

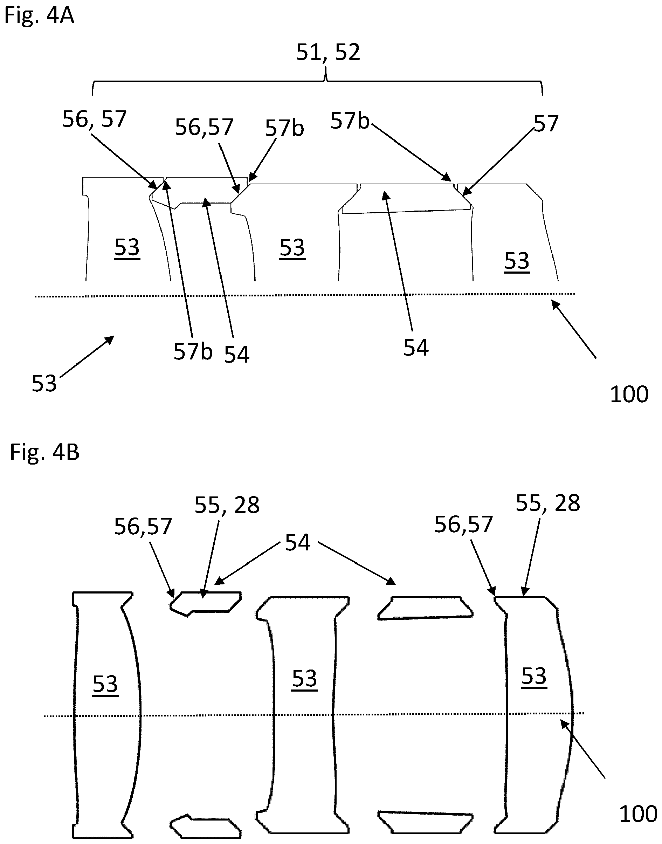

Fig. 4A shows an optical element stack 51, 52 in the assembled state, wherein the stack 51, 52 comprises not only lenses 53 but also spacer elements 54. Fig. 4B shows the stack in an exploded drawing. All optical elements 53, 54 of the stack have adjoining and complementary contact surfaces 57 at their rim portion 55 for self-aligning the optical element 53, 54 with respect to the other optical elements 53, 54 of the stack.

As can be seen, the contact portions 56 of two adjoining optical elements 53, 54 form a recess 57b for an adhesive. These recesses 57b are also referred to as glue pockets, as the adhesive can be provided to these recesses 57b in order to transpire between the contact surfaces 57 and glue the surfaces 57 to each other.

These recesses 57b are accessible for an outside even in the assembled state of the stack 51, 52, which allows for a rapid and simple assembly of the stack. The stack can thus be assembled and glued together outside the lens barrel 2 or inside. For this reason the lens barrel 2 might comprise predefined openings 29 for provision of the adhesive.

It is explicitly noted that the specific combination of spacers 54 and lenses 53 shown in this example is not limiting the general principle of recesses 57b that are formed from adjoining optical elements 3, 53, 54.

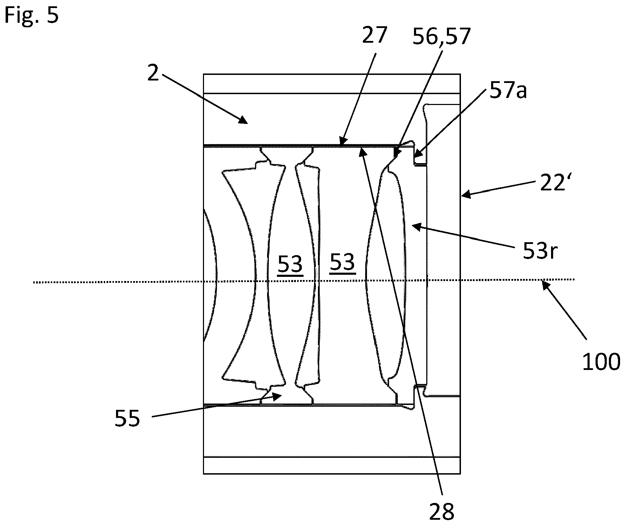

Fig. 5 shows an assembled optical element stack inside the lens barrel 2. It can be seen that the flat areas 28 facing towards the lens barrel 2 can be used to glue the optical element 53 to an inner lens barrel wall 27.

Moreover, on the side of the second opening 22' of the lens barrel 2 the lens barrel 2 has a contact surface on its inside that is oriented perpendicular to the optical axis 100. The rightmost optical element 53r also has a contact portion 56 with a contact surface 57a extending perpendicular to the optical axis 100, such that the rightmost optical element 53r can be brought to stop at the contact surface of the lens barrel 2. This geometry allows a self-alignment, particularly along the optical axis 100 of the optical element stack with the lens barrel 2. As for example the images sensor 9 is arranged at the second opening 22' at a predefined distance, the position of the lenses along the optical axis 100 inside the lens barrel 2 of also of great importance. The rightmost optical element 53r has also an inclined contact surface 57 on the side facing the adjoining optical element 53, such as to self-align the adjoining optical element 53 as described above.

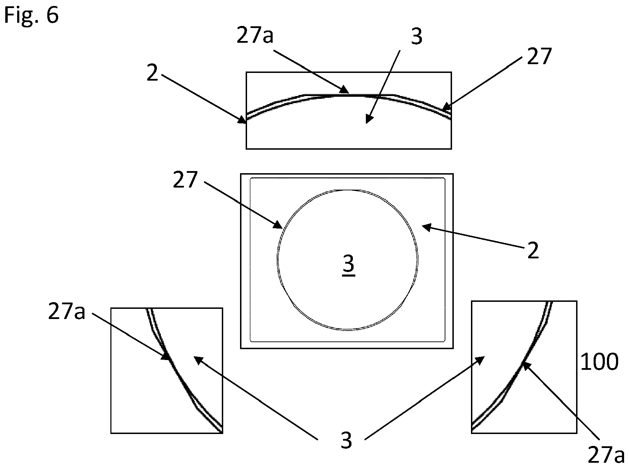

Fig. 6 shows three azimuthally flat portions 27a of the lens barrel 2 that are configured to fix a circular optical element 3 at a specific orientation inside the lens barrel 2. This geometry has the advantage that the contact areas between the optical element 3 and the lens barrel 2 are clearly defined as in contrast to a completely circular lens barrel wall 27 geometry.

The flat portions 27a are secants to a circle that aligns with the remaining contour of the lens barrel 2 cross-section.

It can also be seen that the lens barrel 2 can have an inner cross-section (here almost circular) that differs from the outer contour (which is rectangular in this example), providing an increased stiffness to the lens barrel 2.

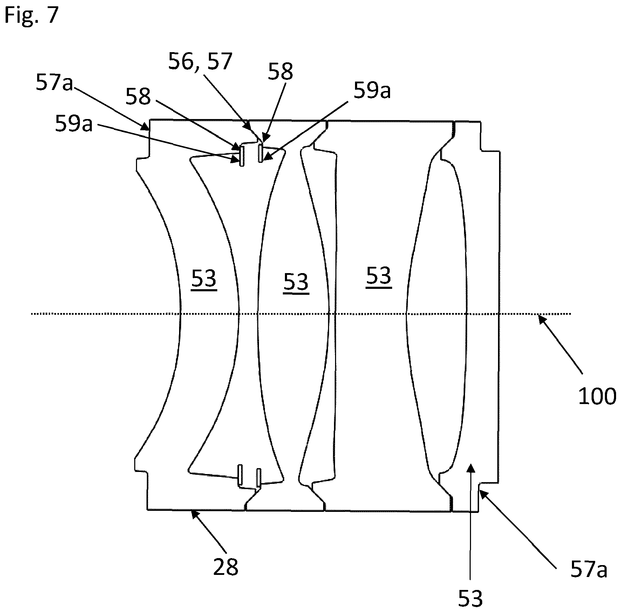

Fig. 7 shows a schematic cross-section through an assembled optical element stack with an aperture element 59a attached to a solid lens 53. The lens 53 has a ring-shaped area 58 extending perpendicular to the optical axis 100. This area 58 is used to arrange and glue a thin aperture 59a between two lenses 53 that have to be spaced so close to each other along the optical axis 100 that the aperture element 59a cannot be formed as a separate optical element 3 with contact portions 56.

Such an aperture 59a is attached to the lens 53 prior to the assembly of the optical element stack.

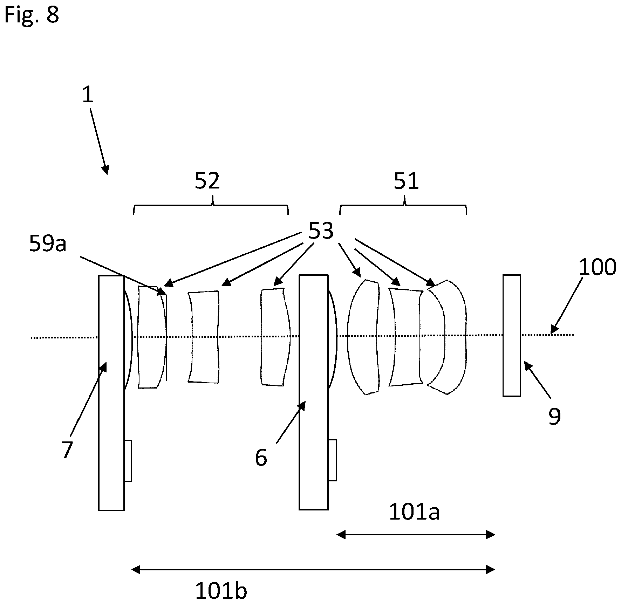

Fig. 8 shows a schematic exploded cross-section through an optical zoom system 1 having an equidistantly arranged first and second lens 6 7. Such a zoom system 1 is a special case of the optical system 1 shown in Fig. 1. Therefore, elements and features explained already in Fig. 1 are not repeated here.

The optical zoom system 1 has the image sensor 9, the first and the second lens 6, 7 arranged in predefined distances to each other. The first lens 6 is arranged at a first predefined distance 101a along the optical axis, wherein the second lens 7 is arranged in a second distance along the optical axis to the image sensor 9, wherein the second distance 101b is twice as large as the first predefined distance 101a. Therefore, the slots of the lens barrel (not shown) are arranged accordingly on the lens barrel 2.

Arranging the lenses 6, 7 at these specific distances 101a, 101b to the image sensor 9 allows using the same actuator type.

The zoom system 1 has an aperture stop 59a close to a first solid lens. This allows for a compact zoom system.

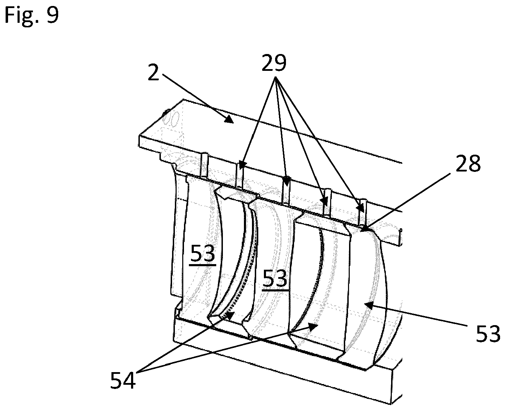

Fig. 9 shows a schematic cut through the lens barrel 2 having holes 29 for the provision of an adhesive. The holes 29 are arranged over the flat areas 28 of the rim portions 55 of the optical elements 3, 53, 54. Such that an adhesive provided to the holes 29 seeps through the holes 29 and transpires between the inner lens barrel wall 27 and the flat areas 28 of the optical elements 3, 53, 54 so as to fix the optical elements 3, 53, 54 to the lens barrel 2.

The holes 29 can be covered after provision of the adhesive with an appropriate cloth or compound so as to provide protection against dust and humidity.

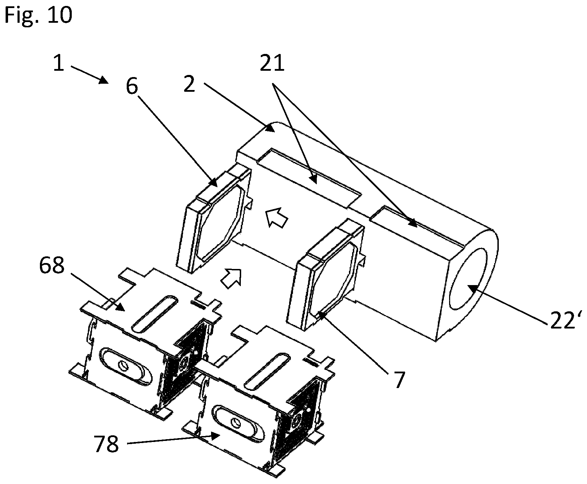

Fig. 10 shows the assembly process of the actuators 68, 78 to the optical system 1. After the lens system 5 is provided and fixed to the lens barrel 2, the first and the second lens 6, 7 are inserted through the first and the second slot 24, 25.

The portion of the container of the first and the second lens 6, 7 comprising the deformable wall members 63, 73 are outside the lens barrel 2.

The lens barrel 2 comprises guiding notches 21 that are configured to receive the actuator 68, 78 in a second position by a lateral movement indicated by a hollow arrow, the actuator 68, 78, has a portion that is designed to adjoin to the guiding notches 21.

From the second position, also referred to a mating zone, the actuators can be moved parallel (indicated by a hollow arrow) to the optical axis 100 by means of the guiding notches 21 of the system such as to adjoin and potentially engage (i.e. mate) with the deformable wall member 63, 73 of the first and second lens 6, 7 in a third position. Only on the third positon a contact is made between the actuator piston and the deformable wall member 63, 73 or the pusher plate arranged on the wall member 63, 73.

In the third positon the actuator 68, 78 can be locked to the optical system 1 or glued to the lens barrel 2 and/or the first and second lens 6, 7 respectively.

This allows assembling a plurality of different optical system having different actuators, and/or adjustable lenses and/or lens system. A modular optical system is created that can be assembled rapidly and easily. This is a novel and advantageous aspect of the invention.

The first and/or second lens 6, 7, the lens barrel 2 and the actuator 68, 78 therefore form a particularly rigid system that is resistant to mechanical shocks.

The actuator 68, 78 is configured to provide an actuation force parallel to the optical axis 100 of the system 1.

The deformable wall member 63, 73 is configured to receive an actuation force parallel to the optical axis 100.

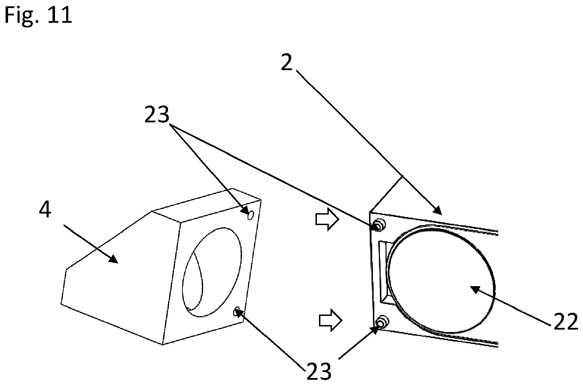

In order to arrange the fold mirror 4 at the correct position to the lens barrel 2, the lens barrel 2 comprises mating pins 23 and/or mating holes 23 at a side facing along the optical axis 100, see e.g. Fig. 11.

The fold mirror 4 comprises corresponding mating holes 23 and/or pins 23 that are configured to position the fold mirror 4 in a predefined orientation and position to the barrel 2. An adhesive can be provided to the mating pins 23 and holes 23. This allows for simple assembly of the fold mirror 4 to the optical system 1.

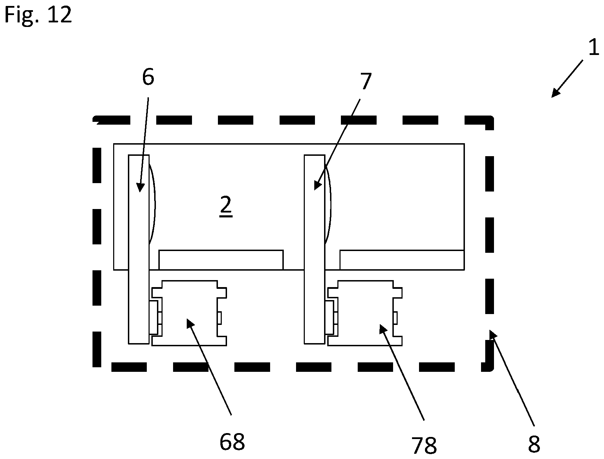

Fig. 12 shows a schematic cross-section of the optical system 1 comprising a clamping device 8 (broken line). The clamping device 8 exerts a clamping force to the lens barrel 2, particularly along the optical axis 100, therefore providing additional stability.

The clamping device 8 can be formed as a housing such as to provide protection against dust and other external influences.

## Claims

1. An optical system (1) comprising a solid lens barrel (2) for optical elements (3), wherein the lens barrel (2) extends along an optical axis (100) of the optical system (1), wherein the lens barrel (2) holds a plurality of optical elements (3) comprising:
a) a lens system (5), comprising at least one solid lens (53),
b) a first lens (6) having an adjustable focal length, wherein the first lens (6) comprises a container (62) filled with a transparent fluid, wherein the container (62) comprises an elastically deformable and transparent membrane (61) facing a transparent bottom portion (67) of the container (62),
wherein the lens barrel (2) has a first and a second opening (22, 22') facing along the optical axis (100), wherein the first and/or the second opening (22, 22') is configured to receive the lens system (5), wherein the lens barrel (2) has a first slot (24) extending perpendicular to the optical axis (100), wherein the first lens (6) is inserted through the first slot (24) perpendicular the optical axis (100) into the lens barrel (2).

2. The optical system (1) according to claim 1, wherein the optical system (1) comprises a second lens (7) having an adjustable focal length, wherein the second lens (7) comprises a container (72) filled with a transparent fluid, wherein the container (72) comprises an elastically deformable and transparent membrane (71) facing a transparent bottom portion (77) of the container (72), wherein the lens barrel (2) has a second slot (25) extending perpendicular to the optical axis (100), wherein the second lens (7) is inserted through the second slot (25) in the lens barrel (2).

3. The optical system (1) according claim 1 or 2, wherein for adjusting the focal length of the first and/or the second lens (6, 7), the membrane (61, 71) of the first and/or the second lens (6, 7) is connected to a circumferential rigid lens shaping element of the first and/or second lens (6, 7) for defining an area of the membrane (61, 71) having an adjustable membrane curvature.

4. The optical system (1) according to one of the preceding claims, wherein the container (62, 72) of the first and/or the second lens (6, 7) encloses a lens volume filled with the fluid and a reservoir volume filled with the fluid, wherein the reservoir volume is connected, particularly fluidically connected to the lens volume, wherein the container (62, 72) of the first and/or the second lens (6, 7) comprises an elastically deformable wall member (63, 73) adjacent the reservoir volume of the container (62, 72) of the first and/or the second lens (6, 7).

5. The optical system (1) according to claim 4, wherein the elastically deformable wall member (63, 73) of the container (62, 72) of the first and/or the second lens (6, 7) is formed by the membrane (61, 71) of the first and/or the second lens (6, 7).

6. The optical system (1) according to one of the claims 4 or 5, wherein the reservoir volume of the container (62, 72) of the first and/or the second lens (6, 7) is arranged laterally next to the lens volume of the container (62, 72) of the first and/or the second lens (6, 7) in a direction perpendicular to the optical axis (100) of the first and/or the second lens (6, 7).

7. The optical system (1) according to one of the claim 4 to 6, wherein the first and/or the second lens (6, 7) comprises a rigid pusher plate arranged on the elastically deformable wall member (63, 73), particularly on a side of the wall member (63, 73) that faces outwards the container (62, 72), wherein the pusher plate is configured to receive an external force moving the pusher plate inwards or outwards the reservoir volume so as to shrink or increase the reservoir volume and thus to increase or shrink the lens volume accordingly by means of deforming the membrane (61, 71) thereby adjusting the focal length of the first and/or the second lens (6, 7).

8. The optical system (1) according to one of the claims 4 to 7, wherein the membrane (61, 71) of the first and/or the second lens (6, 7) inserted in the first and/or second slot (24, 25) is enclosed by the lens barrel (2), wherein a container portion comprising the reservoir volume and the deformable wall member (63, 73) protrudes from the lens barrel 2 such that the deformable wall member (63, 73), particularly the pusher plate is accessible from an outside of the lens barrel (2), allowing to control the focal length of the first and/or the second lens (6, 7) with an external lens actuator (68, 78).

9. The optical system according to any one of the preceding claims, wherein the lens system (5) comprises at least one optical element stack (51, 52) with a plurality of stacked optical elements (3, 53, 54), arranged along and on the optical axis (100) in the lens barrel (2).

10. The optical system (1) according to claim 9, wherein the optical system (1) comprises an image sensor (9) arranged at the lens barrel (2), wherein the lens barrel (2) comprises two optical element stacks (51, 52), a first optical element stack (51) and a second optical element stack (52), with stacked optical elements (3, 53, 54), wherein the first lens (6) with an adjustable focal length is arranged at a first predefined distance (101a) from the image sensor (9), wherein the second lens (7) with an adjustable focal length is arranged at a second predefined distance (101b) from the image sensor (9), wherein the first optical element stack (51) is arranged on the optical axis (100) between the first lens (6) and the image sensor (9), wherein the second optical element stack (52) is arranged between the first and the second lens (6, 7) on the optical axis (100) of the lens barrel (2), particularly such that the optical system (1) forms an optical zoom system, particularly wherein the zoom is adjustable by means of the adjustable focal lengths of the first and the second lens (6, 7).

11. The optical system (1) according to claim 10, wherein the second predefined distance (101b) is twice as large as the first predefined distance (101a).

12. The optical system (1) according to any one of the preceding claims, wherein a fold mirror (4) or fold prism is arranged at the lens barrel (2).

13. The optical system (1) according to claim 12, wherein the fold mirror (4) is a tiltable mirror configured to provide particularly closed-loop optical stabilization to the optical system (1).

14. The optical system (1) according to any of the preceding claims, wherein the lens barrel (2) comprises transverse openings (29) for the insertion of an alignment tool or an adhesive for fixing the optical elements (3, 53, 54, 6, 7) in the lens barrel (2).

15. The optical system (1) according to any of the preceding claims, wherein the first and/or the second slot (24, 25) has a hard stop portion for the first and/or the second lens (6, 7) for adjoining the first and/or the second lens (6, 7) to said hard stop portion in a predefined position.

## Patentansprüche

1. Ein optisches System (1), umfassend einen massiven Linsentubus (2) für optische Elemente (3), wobei sich der Linsentubus (2) entlang einer optischen Achse (100) des optischen Systems (1) erstreckt, wobei der Linsentubus (2) eine Vielzahl von optischen Elementen (3) hält, umfassend
a. ein Linsensystem (5), umfassend mindestens eine feste Linse (53),
b. eine erste Linse (6), die eine einstellbare Brennweite aufweist, wobei die erste Linse (6) einen mit einem transparenten Fluid gefüllten Behälter (62) umfasst, wobei der Behälter (62) eine elastisch verformbare und transparente Membran (61) umfasst, die einem transparenten Bodenabschnitt (67) des Behälters (62) zugewandt ist,
wobei der Linsentubus (2) eine erste und eine zweite Öffnung (22, 22') aufweist, die der optischen Achse (100) zugewandt sind, wobei die erste und/oder die zweite Öffnung (22, 22') dazu eingerichtet ist, das Linsensystem (5) aufzunehmen, wobei der Linsentubus (2) einen ersten Schlitz (24) aufweist, der sich senkrecht zu der optischen Achse (100) erstreckt, wobei die erste Linse (6) durch den ersten Schlitz (24) senkrecht zu der optischen Achse (100) in den Linsentubus (2) eingesetzt ist.

2. Das optische System (1) gemäß Anspruch 1, wobei das optische System (1) eine zweite Linse (7) umfasst, die eine einstellbare Brennweite aufweist, wobei die zweite Linse (7) einen Behälter (72) umfasst, der mit einer transparenten Flüssigkeit gefüllt ist, wobei der Behälter (72) eine elastisch verformbare und transparente Membran (71) umfasst, die einem transparenten Bodenabschnitt (77) des Behälters (72) zugewandt ist, wobei der Linsentubus (2) einen zweiten Schlitz (25) aufweist, der sich senkrecht zu der optischen Achse (100) erstreckt, wobei die zweite Linse (7) durch den zweiten Schlitz (25) in den Linsentubus (2) eingeführt ist.

3. Das optische System (1) gemäß Anspruch 1 oder 2, wobei zur Anpassung der Brennweite der ersten und/oder zweiten Linse (6, 7) die Membran (61, 71) der ersten und/oder zweiten Linse (6, 7) mit einem umlaufenden starren Linsenformungselement der ersten und/oder zweiten Linse (6, 7) verbunden ist, um einen Bereich der Membran (61, 71) zu definieren, der eine einstellbare Membrankrümmung aufweist.

4. Das optische System (1) gemäß einem der vorhergehenden Ansprüche, wobei der Behälter (62, 72) der ersten und/oder der zweiten Linse (6, 7) ein mit der Flüssigkeit gefülltes Linsenvolumen und ein mit dem Fluid gefülltes Reservoirvolumen einschließt, wobei das Reservoirvolumen verbunden, insbesondere strömungstechnisch mit dem Linsenvolumen verbunden ist, wobei der Behälter (62, 72) der ersten und/oder der zweiten Linse (6, 7) ein elastisch verformbares Wandelement (63, 73) angrenzend an das Reservoirvolumen des Behälters (62, 72) der ersten der ersten und/oder der zweiten Linse (6, 7) aufweist.

5. Das optische System (1) gemäß Anspruch 4, wobei das elastisch verformbare Wandelement (63, 73) des Behälters (62, 72) der ersten und/oder der zweiten Linse (6, 7) durch die Membran (61, 71) der ersten und/oder der zweiten Linse (6, 7) ausgebildet ist.

6. Das optische System (1) gemäß einem der Ansprüche 4 oder 5, wobei das Reservoirvolumen des Behälters (62, 72) der ersten und/oder der zweiten Linse (6, 7) seitlich neben dem Linsenvolumen des Behälters (62, 72) der ersten und/oder der zweiten Linse (6, 7) in einer Richtung senkrecht zur optischen Achse (100) der ersten und/oder der zweiten Linse (6, 7) angeordnet ist.

7. Das optische System (1) gemäß einem der Ansprüche 4 bis 6, wobei die erste und/oder die zweite Linse (6, 7) eine starre Drückerplatte umfasst, die an dem elastisch verformbaren Wandelement (63, 73) angeordnet ist, insbesondere an einer Seite des Wandelements (63, 73), die dem Behälter (62, 72) nach außen zugewandt ist, wobei die Drückerplatte dazu eingerichtet ist, eine äußere Kraft aufzunehmen, die die Drückerplatte in das Reservoirvolumen hinein oder aus dem Reservoirvolumen heraus bewegt, um das Reservoirvolumen zu verkleinern oder zu vergrößern und somit das Linsenvolumen mittels Verformung der Membran (61, 71) entsprechend zu vergrößern oder zu verkleinern, wodurch die Brennweite der ersten und/oder der zweiten Linse (6, 7) angepasst wird.

8. Das optische System (1) gemäß einem der Ansprüche 4 bis 7, wobei die Membran (61, 71) der in den ersten und/oder zweiten Schlitz (24, 25) eingesetzten ersten und/oder zweiten Linse (6, 7) vom Linsentubus (2) umschlossen ist, wobei ein das Reservoirvolumen umfassendes Behälterteil und das verformbare Wandelement (63, 73) aus dem Linsentubus (2) herausragt, so dass das verformbare Wandelement (63, 73), insbesondere die Drückerplatte, von einer Außenseite des Linsentubus (2) zugänglich ist, wodurch die Brennweite der ersten und/oder der zweiten Linse (6, 7) mit einem externen Linsenstellglied (68, 78) gesteuert werden kann.

9. Das optische System gemäß einem der vorhergehenden Ansprüche, wobei das Linsensystem (5) mindestens einen optischen Elementstapel (51, 52) mit einer Vielzahl von gestapelten optischen Elementen (3, 53, 54) umfasst, die entlang und auf der optischen Achse (100) in dem Linsentubus (2) angeordnet sind.

10. Das optische System (1) gemäß Anspruch 9, wobei das optische System (1) einen am Linsentubus (2) angeordneten Bildsensor (9) umfasst, wobei der Linsentubus (2) zwei optische Elementstapel (51, 52), einen ersten optischen Elementstapel (51) und einen zweiten optischen Elementstapel (52), umfasst, mit gestapelten optischen Elementen (3, 53, 54), wobei die erste Linse (6) mit einer einstellbaren Brennweite in einem ersten vordefinierten Abstand (101a) von dem Bildsensor (9) angeordnet ist, wobei die zweite Linse (7) mit einer einstellbaren Brennweite in einem zweiten vordefinierten Abstand (101b) von dem Bildsensor (9) angeordnet ist, wobei der erste optische Elementstapel (51) auf der optischen Achse (100) zwischen der ersten Linse (6) und dem Bildsensor (9) angeordnet ist, wobei der zweite optische Elementstapel (52) zwischen der ersten und der zweiten Linse (6, 7) auf der optischen Achse (100) des Linsentubus (2) angeordnet ist, insbesondere derart, dass das optische System (1) ein optisches Zoomsystem ausbildet, insbesondere wobei der Zoom mittels der einstellbaren Brennweiten der ersten und der zweiten Linse (6, 7) einstellbar ist.

11. Das optische System (1) gemäß Anspruch 10, wobei der zweite vordefinierte Abstand (101b) doppelt so groß wie der erste vordefinierte Abstand (101a) ist.

12. Das optische System (1) gemäß einem der vorhergehenden Ansprüche, wobei ein Klappspiegel (4) oder ein Klappprisma am Linsentubus (2) angeordnet ist.

13. Das optische System (1) gemäß Anspruch 12, wobei der Klappspiegel (4) ein kippbarer Spiegel ist, der dazu eingerichtet ist, dem optischen System (1) insbesondere eine optische Stabilisierung im geschlossenen Regelkreis zu verleihen.

14. Das optische System (1) gemäß einem der vorhergehenden Ansprüche, wobei der Linsentubus (2) Queröffnungen (29) zum Einführen eines Ausrichtungswerkzeugs oder eines Klebstoffs zur Befestigung der optischen Elemente (3, 53, 54, 6, 7) im Linsentubus (2) umfasst.

15. Das optische System (1) gemäß einem der vorhergehenden Ansprüche, wobei der erste und/oder der zweite Schlitz (24, 25) einen harten Anschlagabschnitt für die erste und/oder die zweite Linse (6, 7) aufweist, um die erste und/oder die zweite Linse (6, 7) in einer vordefinierten Position an den harten Anschlagabschnitt anzuschließen.

## Revendications

1. Système optique (1) comprenant un barillet de lentille solide (2) pour des éléments optiques (3), dans lequel le barillet de lentille (2) s'étend le long d'un axe optique (100) du système optique (1), dans lequel le barillet de lentille (2) contient une pluralité d'éléments optiques (3) comprenant :
a) un système de lentille (5), comprenant au moins une lentille solide (53),
b) une première lentille (6) ayant une longueur focale réglable, dans lequel la première lentille (6) comprend un récipient (62) rempli d'un fluide transparent, dans lequel le récipient (62) comprend une membrane élastiquement déformable et transparente (61) tournée vers une portion inférieure transparente (67) du récipient (62),
dans lequel le barillet de lentille (2) a une première et une seconde ouverture (22, 22') tournées le long de l'axe optique (100), dans lequel la première et/ou la seconde ouverture (22, 22') est configurée pour recevoir le système de lentille (5), dans lequel le barillet de lentille (2) a une première fente (24) s'étendant perpendiculairement à l'axe optique (100), dans lequel la première lentille (6) est insérée à travers la première fente (24) perpendiculairement à l'axe optique (100) dans le barillet de lentille (2).

2. Système optique (1) selon la revendication 1, dans lequel le système optique (1) comprend une seconde lentille (7) ayant une longueur focale réglable, dans lequel la seconde lentille (7) comprend un récipient (72) rempli d'un fluide transparent, dans lequel le récipient (72) comprend une membrane élastiquement déformable et transparente (71) tournée vers une portion inférieure transparente (77) du récipient (72), dans lequel le barillet de lentille (2) a une seconde fente (25) s'étendant perpendiculairement à l'axe optique (100), dans lequel la seconde lentille (7) est insérée à travers la seconde fente (25) dans le barillet de lentille (2).

3. Système optique (1) selon la revendication 1 ou 2, dans lequel pour régler la longueur focale de la première et/ou la seconde lentille (6, 7), la membrane (61, 71) de la première et/ou la seconde lentille (6, 7) est connectée à un élément de mise en forme de lentille rigide circonférentiel de la première et/ou seconde lentille (6, 7) pour définir une zone de la membrane (61, 71) ayant une courbure de membrane réglable.

4. Système optique (1) selon une des revendications précédentes, dans lequel le récipient (62, 72) de la première et/ou la seconde lentille (6, 7) renferme un volume de lentille rempli du fluide et un volume de réservoir rempli du fluide, dans lequel le volume de réservoir est connecté, notamment connecté de manière fluidique au volume de lentille, dans lequel le récipient (62, 72) de la première et/ou la seconde lentille (6, 7) comprend un élément de paroi élastiquement déformable (63, 73) adjacent au volume de réservoir du récipient (62, 72) de la première et/ou la seconde lentille (6, 7).

5. Système optique (1) selon la revendication 4, dans lequel l'élément de paroi élastiquement déformable (63, 73) du récipient (62, 72) de la première et/ou la seconde lentille (6, 7) est formé par la membrane (61, 71) de la première et/ou la seconde lentille (6, 7).

6. Système optique (1) selon une des revendications 4 ou 5, dans lequel le volume de réservoir du récipient (62, 72) de la première et/ou la seconde lentille (6, 7) est agencé latéralement à côté du volume de lentille du récipient (62, 72) de la première et/ou la seconde lentille (6, 7) dans une direction perpendiculaire à l'axe optique (100) de la première et/ou la seconde lentille (6, 7).

7. Système optique (1) selon une des revendications 4 à 6, dans lequel la première et/ou la seconde lentille (6, 7) comprend une plaque poussoir rigide agencée sur l'élément de paroi élastiquement déformable (63, 73), notamment sur un côté de l'élément de paroi (63, 73) qui est tourné vers l'extérieur du récipient (62, 72), dans lequel la plaque poussoir est configurée pour recevoir une force externe déplaçant la plaque poussoir vers l'intérieur ou vers l'extérieur du volume de réservoir de manière à réduire ou augmenter le volume de réservoir et ainsi à augmenter ou réduire le volume de lentille en conséquence au moyen d'une déformation de la membrane (61, 71), réglant de ce fait la longueur focale de la première et/ou la seconde lentille (6, 7).

8. Système optique (1) selon une des revendications 4 à 7, dans lequel la membrane (61, 71) de la première et/ou la seconde lentille (6, 7) insérée dans la première et/ou seconde fente (24, 25) est renfermée par le barillet de lentille (2), dans lequel une portion de récipient comprenant le volume de réservoir et l'élément de paroi déformable (63, 73) fait saillie depuis le barillet de lentille (2) de sorte que l'élément de paroi déformable (63, 73), notamment la plaque poussoir est accessible depuis un extérieur du barillet de lentille (2), permettant de commander la longueur focale de la première et/ou la seconde lentille (6, 7) avec un actionneur de lentille externe (68, 78).

9. Système optique selon l'une quelconque des revendications précédentes, dans lequel le système de lentille (5) comprend au moins une pile d'éléments optiques (51, 52) avec une pluralité d'éléments optiques empilés (3, 53, 54), agencés le long de et sur l'axe optique (100) dans le barillet de lentille (2).

10. Système optique (1) selon la revendication 9, dans lequel le système optique (1) comprend un capteur d'image (9) agencé au niveau du barillet de lentille (2), dans lequel le barillet de lentille (2) comprend deux piles d'éléments optiques (51, 52), une première pile d'éléments optiques (51) et une seconde pile d'éléments optiques (52), avec des éléments optiques empilés (3, 53, 54), dans lequel la première lentille (6) avec une longueur focale réglable est agencée à une première distance prédéfinie (101a) du capteur d'image (9), dans lequel la seconde lentille (7) avec une longueur focale réglable est agencée à une seconde distance prédéfinie (101b) du capteur d'image (9), dans lequel la première pile d'éléments optiques (51) est agencée sur l'axe optique (100) entre la première lentille (6) et le capteur d'image (9), dans lequel la seconde pile d'éléments optiques (52) est agencée entre la première et la seconde lentille (6, 7) sur l'axe optique (100) du barillet de lentille (2), notamment de sorte que le système optique (1) forme un système de zoom optique, notamment dans lequel le zoom est réglable au moyen des longueurs focales réglables de la première et la seconde lentille (6, 7).

11. Système optique (1) selon la revendication 10, dans lequel la seconde distance prédéfinie (101b) est deux fois plus grande que la première distance prédéfinie (101a).

12. Système optique (1) selon l'une quelconque des revendications précédentes, dans lequel un miroir pliant (4) ou prisme pliant est agencé au niveau du barillet de lentille (2).

13. Système optique (1) selon la revendication 12, dans lequel le miroir pliant (4) est un miroir basculant configuré pour fournir notamment une stabilisation optique en boucle fermée au système optique (1).

14. Système optique (1) selon l'une quelconque des revendications précédentes, dans lequel le barillet de lentille (2) comprend des ouvertures transversales (29) pour l'insertion d'un outil d'alignement ou d'un adhésif pour fixer les éléments optiques (3, 53, 54, 6, 7) dans le barillet de lentille (2).

15. Système optique (1) selon l'une quelconque des revendications précédentes, dans lequel la première et/ou la seconde fente (24, 25) a une portion de butée dure pour la première et/ou la seconde lentille (6, 7) pour adjoindre la première et/ou la seconde lentille (6, 7) à ladite portion de butée dure dans une position prédéfinie.
